# FASCICULE DE BREVET EUROPEEN

(11) **EP 2 378 620 B1**
(45) Date de publication et mention de la délivrance du brevet: **27.07.2016**
(21) Numéro de dépôt: 11161930.0
(22) Date de dépôt: 11.04.2011
(51) Int. Cl.: H02G 3/30, H02G 3/34, H02G 3/04

(54) **Chemin de câbles comprenant au moins une goulotte et au moins un support, et méthode de montage d'une telle goulotte sur un tel support**
Kabelkanal, der mindestens einen Kabelkanal und eine Halterung umfasst, und Montagemethode eines solchen Kabelkanals auf einer solchen Halterung
Cable trough including at least one channel and at least one support, and assembly method for such a channel on such a support

(30) Priorité: 13.04.2010 FR 1052798
(43) Date de publication de la demande: 19.10.2011
(73) Titulaire: Gewiss France SAS, 21430 Liernais (FR)
(72) Inventeur: Leguy, Claude, 21430, Marcheseuil (FR)
(74) Mandataire: Myon, Gérard Jean-Pierre

(56) Documents cités:
- EP-A1- 1 542 329
- FR-A1- 2 840 462
- FR-A1- 2 857 788

## Description

La présente invention concerne un support pour une goulotte de chemin de câbles en treillis de fils soudés. L'invention concerne également un chemin de câbles comprenant au moins une telle goulotte et au moins un tel support. L'invention concerne enfin une méthode de montage d'une goulotte en treillis de fils soudés sur un support.

Un chemin de câbles comprend généralement plusieurs goulottes mises bout à bout et supportées par des consoles ou des pendards. Les goulottes peuvent être réalisées par pliage de flans de tôle ou par réalisation d'un treillis de fils soudés, le plus souvent métalliques. Dans le cas d'une goulotte en treillis de fils soudés, on identifie généralement des fils de chaîne, qui sont rectilignes et parallèles à un axe longitudinal de la goulotte, et des fils de trame, qui sont perpendiculaires à cet axe et cintrés de façon à définir le fond et les côtés de la goulotte, en association avec les fils de chaîne.

Il est connu de monter une goulotte en treillis de fils soudés sur une console au moyen de boulons traversant des ouvertures prévues à cet effet dans la console et dont les têtes sont adaptées pour recouvrir et coincer des fils de chaînes appartenant au fond de la goulotte contre la face supérieure d'une console. Un tel mode de fixation est relativement fastidieux à mettre en oeuvre. L'opérateur risque de perdre les boulons.

Il est par ailleurs connu de WO-A-96/17143 de réaliser, sur les arêtes et la face dorsale d'un élément porteur, des encoches de réception de fils de chaîne d'une goulotte. Chaque encoche est bordée par une languette limitée en longueur et en largeur pour pouvoir être rabattue autour d'un fil de chaîne, ce qui immobilise fermement la goulotte sur la console. Lorsqu'une languette a été rabattue autour d'un fil de chaîne, elle le coince au sein d'une encoche, ce qui supprime tous les degrés de liberté et ne permet pas l'ajustement de la position de la goulotte selon une direction parallèle à son axe longitudinal, ou selon une transversale.

Il est également connu d'immobiliser une goulotte de chemin de câbles sur une console à l'aide de doigts déformables qui sont ménagés dans une patte s'étendant au-dessus d'une encoche. Une fois rabattue dans une configuration de retenue d'un fil de chaîne, un doigt bride et immobilise fermement ce fil de chaîne contre la console, ce qui supprime également tout degré de liberté.

Or, il est parfois nécessaire, notamment en cours de pose d'un chemin de câbles, d'ajuster la position des différentes goulottes selon une direction parallèle à leurs axes longitudinaux respectifs, ou perpendiculairement à ces axes, ce que ne permettent pas les dispositifs connus.

FR-A-2 857 788 divulgue un support qui comporte des encoches de réception de fils de chaîne d'une goulotte. Des languettes sont prévues au fond des encoches et peuvent être rabattues, une fois les fils de chaîne introduits dans les encoches, de manière à retenir les fils de chaîne dans les encoches. Une fois les languettes rabattues, il n'est pas passable de translater la goulotte perpendiculairement aux fils de chaîne car les languettes bloquent ce mouvement, ce qui rend l'installation du chemin de câbles peu aisée.

FR-A-2 840 462 divulgue un support pour une goulotte de chemin de câbles en treillis de fils soudés. Le support comprend une paroi verticale, prolongée vers le haut par une portion horizontale comprenant des pattes séparées entre elles par des encoches de réception des fils de chaîne de la goulotte. Les pattes délimitent Je haut des encoches. Une découpe, située en-dessous d'une des encoches et ménagée dans la paroi, définit une languette parallèle à l'axe longitudinal du support. Dans une première configuration, la languette ne s'oppose pas à l'introduction des fils de chaîne dans les encoches, en-dessous des pattes. Une fois les fils de chaîne en place dans les encoches, cette languette est rabattue en regard d'un des fils de chaîne pour bloquer ce fil de chaîne dans cette encoche. Une fois la languette rabattue, il n'est plus possible de déplacer la goulotte par rapport au support, selon une direction perpendiculaire aux fils de chaîne. Ceci rend l'alignement des goulottes, en vue de leur éclissage, peu aisé. Ainsi, un tel chemin de câble est peu commode à installer.

C'est à ces inconvénients qu'entend plus particulièrement remédier l'invention en proposant un nouveau chemin de câbles qui permet de retenir efficacement en place une goulotte en treillis de fils soudés, tout en permettant un ajustement de sa position.

A cet effet, l'invention concerne un chemin de câbles comprenant au moins une goulotte en treillis de fils soudés et au moins un support sur lequel est montée la goulotte. Le support comprend un corps qui a un profil en U, avec deux ailes et une paroi dorsale. Au moins une encoche est ménagée à la fois dans la paroi dorsale et dans les ailes. Cette encoche est adaptée pour recevoir un fil de chaîne de la goulotte. Au moins un premier bord de l'encoche est pourvu d'au moins une languette de verrouillage d'un fil de chaîne déformable entre une première configuration et une deuxième configuration. La languette, dans la première configuration, est rabattue selon une direction perpendiculaire à un axe longitudinal du support et s'étend, par rapport à un deuxième bord de l'encoche situé au niveau de la paroi dorsale, à une première distance, mesurée parallèlement à l'axe longitudinal, strictement supérieure au diamètre du fil de chaîne. Selon l'invention, le premier bord est au niveau de la paroi dorsale et dans la deuxième configuration, la languette s'étend dans une direction parallèle ou globalement parallèle à l'axe longitudinal en direction du deuxième bord de l'encoche, à une deuxième distance de ce deuxième bord, mesurée parallèlement à l'axe longitudinal du support, strictement inférieure au diamètre du fil de chaîne.

Grâce à l'invention, la languette de verrouillage permet, dans sa première configuration, la mise en place d'un fil de chaîne de goulotte dans l'encoche. Dans sa deuxième configuration, la languette de verrouillage retient le fil de chaîne dans l'encoche, sans le brider contre les bords de l'encoche, c'est-à-dire en autorisant des mouvements de ce fil de chaîne au sein de l'encoche, à la fois selon une direction parallèle à l'axe longitudinal d'une goulotte et selon une direction perpendiculaire à cet axe. Ceci apporte un confort supplémentaire pour l'installateur, notamment lorsque celui-ci procède à l'alignement des goulottes d'un chemin de câbles en vue de leur éclissage. Ainsi, un tel chemin de câbles est plus facile à installer que ceux de l'état de la technique. Au sens de l'invention, une direction et un axe sont parallèles ou globalement parallèles s'ils forment entre eux un angle nul ou inférieur à 12°.

Selon des aspects avantageux de l'invention, un tel chemin de câbles peut incorporer une ou plusieurs des caractéristiques suivantes prises dans toute combinaison techniquement admissible :
- dans la deuxième configuration, la distance entre la languette et le deuxième bord de l'encoche est inférieure à 20 % du diamètre du fil de chaîne ;
- la languette présente une ouverture de passage d'un outil de manoeuvre de la languette pour sa déformation de sa première configuration vers sa deuxième configuration ;
- le deuxième bord est formé sur une partie de la paroi qui s'étend en porte-à-faux par rapport aux portions de l'encoche ménagées dans les côtés ;
- le support est pourvu de plusieurs encoches aptes à recevoir chacune un fil de chaîne d'une goulotte et chaque encoche est pourvue d'une languette de verrouillage déformable entre la première position et la deuxième position ;
- la paroi présente des ouvertures de passage d'un moyen de fixation d'une goulotte de chemin de câbles en tôle ;
- le support constitue une console de supportage qui, en configuration installée, a son axe longitudinal horizontal, et la paroi est une paroi supérieure de la console, la ou les encoches étant destinées à recevoir chacune un fil de chaîne constitutif du fond de la goulotte ;
- le support constitue un pendard de supportage qui, en configuration installée, a son axe longitudinal vertical, et la paroi est une paroi latérale du pendard, la ou les encoches étant destinées à recevoir chacune un fil de chaîne constitutif d'un côté de la goulotte ;
- le deuxième bord de chaque encoche est plus proche d'une semelle de fixation du support que le premier bord de cette encoche.

L'invention concerne enfin une méthode de montage d'une goulotte en treillis de fils soudés sur un support qui comprend un corps qui a un profil en U, avec deux ailes et une paroi dorsale, au moins une encoche adaptée pour recevoir un fil de chaîne de la goulotte étant ménagée à la fois dans la paroi dorsale et dans les ailes et, plus spécifiquement, une méthode dans laquelle un fil de chaîne de la goulotte est mis en place dans au moins une encoche du support. Selon l'invention, cette méthode comprend une étape consistant à déformer plastiquement une languette de verrouillage s'étendant à partir d'un premier bord de l'encoche situé au niveau de la paroi dorsale et en direction d'un deuxième bord de cette encoche situé au niveau de la paroi dorsale, en faisant passer la languette de verrouillage d'une première configuration, dans laquelle la languette est rabattue selon une direction perpendiculaire à l'axe longitudinal du support et s'étend, par rapport au deuxième bord, à une première distance mesurée parallèlement à un axe longitudinal du support qui est strictement supérieure au diamètre du fil de chaîne, vers une deuxième configuration, dans laquelle la languette s'étend selon une direction parallèle ou globalement parallèle à l'axe longitudinal en direction du deuxième bord de l'encoche, à une deuxième distance de ce deuxième bord, mesurée parallèlement à l'axe longitudinal, qui est strictement inférieure au diamètre du fil de chaîne.

L'invention sera mieux comprise et d'autres avantages de celle-ci apparaîtront plus clairement à la lumière de la description qui va suivre de trois modes de réalisation d'un support, d'un chemin de câbles et d'une méthode de montage conformes à son principe, donnée uniquement à titre d'exemple et faite en référence aux dessins annexés dans lesquels :
- la figure 1 est une vue en perspective d'une portion de goulotte de chemin de câbles en cours de montage sur une console de supportage conforme à l'invention ;
- la figure 2 est une coupe partielle à plus grande échelle selon la ligne II-II à la figure 1 ;
- la figure 3 est une vue en perspective comparable à la figure 1 au terme d'une opération de déformation réalisée avec le tournevis représenté aux figures 1 et 2 ;
- la figure 4 est une coupe partielle à plus grande échelle selon la ligne IV-IV à la figure 3;
- la figure 5 est une vue correspondant au détail V à la figure 4 pour un support conforme à un deuxième mode de réalisation de l'invention ; et
- la figure 6 est une coupe comparable à la figure 4 pour un support conforme à un troisième mode de réalisation de l'invention.

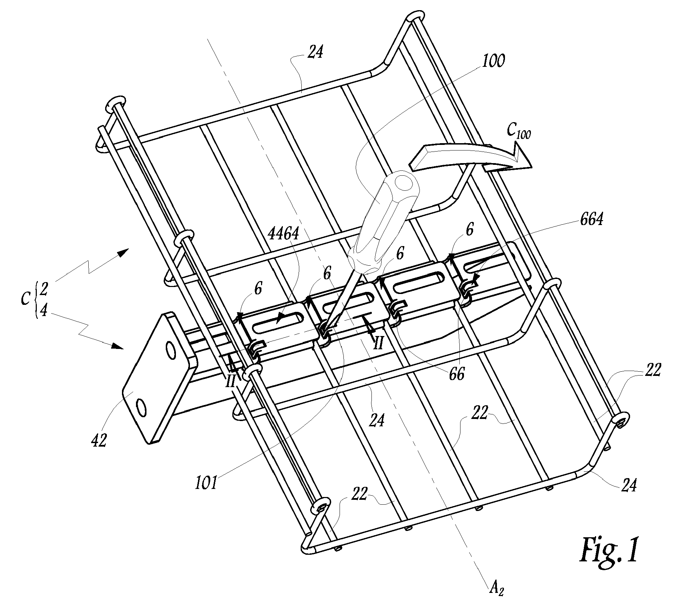

Un chemin de câbles C est partiellement représenté aux figures 1 à 4. Il comprend une goulotte 2 réalisée par soudage de fils métalliques, cette goulotte étant partiellement représentée sur les figures et s'étendant selon un axe longitudinal A₂. La goulotte 2 est formée de fils de chaînes 22 et de fils de trame 24. Les fils de chaînes 22 sont rectilignes et parallèles à l'axe A₂, alors que les fils de trame 24 sont perpendiculaires à cet axe et comprennent une partie centrale 242 et deux parties latérales 244 et 246. Les différentes parties centrales 242 des fils de trame 24 définissent avec les fils de chaînes 22 qui sont soudés sur ces parties, le fond de la goulotte 2, alors que les fils de chaînes 22 définissent avec les parties 244 et 246 des fils de trame, les côtés de la goulotte 2.

La goulotte 2 est montée sur une console 4 pourvue d'une semelle 42 dans laquelle sont percées deux ouvertures 422 et 424 de passage de vis de fixation de la console 4 sur un mur non représenté. La console 4 comprend également un corps 44 soudé sur la semelle 42 et formé par pliage d'un flan de tôle. Le corps 44 s'étend perpendiculairement à la semelle 42, le long d'un axe A₄, qui constitue un axe longitudinal pour la console 4 et qui est horizontal en configuration installée. En section transversale perpendiculaire à l'axe A₄, le corps 44 a un profil en U renversé à fond plat, avec deux ailes 442 et 444 et une paroi dorsale supérieure plane 446.

Des encoches 6 sont ménagées chacune à la fois dans la paroi dorsale 446 et dans les ailes 442 et 444. Chaque encoche 6 est prévue pour recevoir l'un des fils de chaîne 22 du fond de la goulotte 2. Pour ce faire, l'écart entre les encoches 6, mesuré parallèlement à l'axe A₄, est égal à la distance entre deux fils 22 du fond de la goulotte, mesurée perpendiculairement à l'axe A₂.

On note 61, un premier bord d'une encoche 6 au niveau de la paroi 446. On note 62, un deuxième bord de l'encoche 6 au niveau de la paroi 446, le bord 62 de chaque encoche 6 étant plus proche de la semelle 42 que le bord 61.

On note 63 et 64, les bords d'une encoche 62 ménagés respectivement dans l'aile 442 et dans l'aile 444. Les bords 63 et 64 s'étendent, en direction de la semelle 42, et à partir du bord 61, au-delà du bord 62. Ainsi, chaque bord 62 est ménagé sur une partie 4462 de la paroi 446 qui s'étend en porte-à-faux par rapport aux portions de l'encoche définies dans les ailes 442 et 444.

On note L₄, la longueur axiale, c'est-à-dire la longueur mesurée parallèlement à l'axe A₄, d'une partie 4462 de la console 4. Cette longueur L₄ est choisie avec une valeur supérieure au diamètre D₂₂ d'un fil de chaîne 22. Il est ainsi possible de loger les différents fils 22 dans les encoches 6, en dessous des parties 4462 de la console, en poussant la console en direction de la semelle 42, après que les différents fils 22 ont été introduits dans les encoches 6.

Le bord 61 de chaque encoche 6 est équipé d'une languette 66. Autrement dit, les languettes 66 sont reliées à la paroi 446. Les languettes 66 sont déformables plastiquement entre deux configurations.

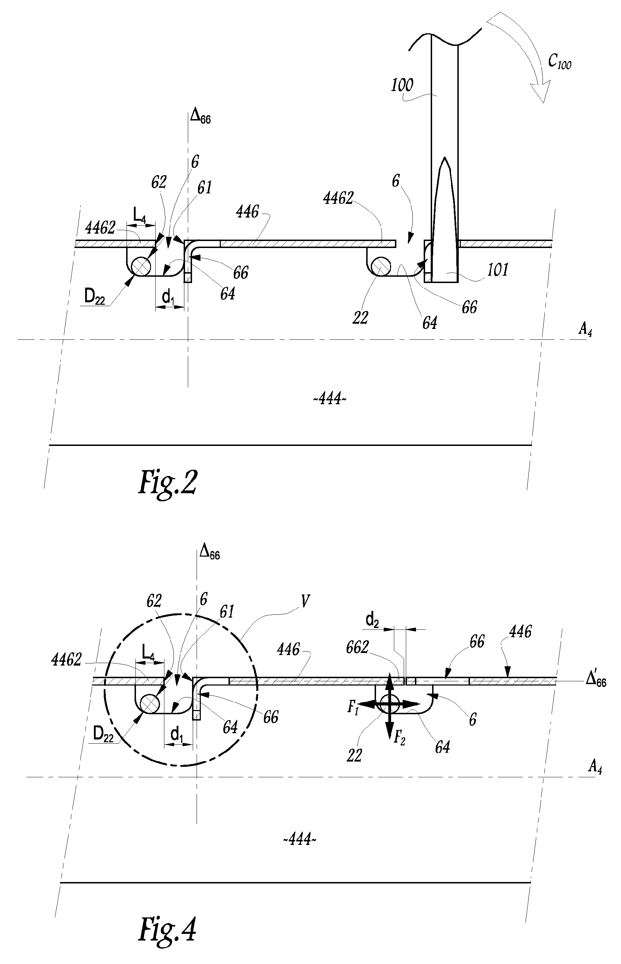

Dans une première configuration représentée pour toutes les languettes 66 aux figures 1 et 2, une languette 66 s'étend à partir du bord 61 en étant rabattue vers les bords 63 et 64, c'est-à-dire selon une direction Δ₆₆ perpendiculaire aux axes A₂ et A₄. La direction Δ₆₆ est, en outre, perpendiculaire à la paroi dorsale supérieure 446 et aux bords 61 et 62 des encoches 6. Dans cette configuration, la distance axiale, mesurée parallèlement à l'axe A₄, entre une languette 66 et le bord 61 a une première valeur d₁ qui est supérieure au diamètre D₂₂. Ainsi, les languettes 66 prévues sur les bords 61 des différentes encoches 6 ne s'opposent pas à l'introduction des fils de chaînes 22 dans ces encoches.

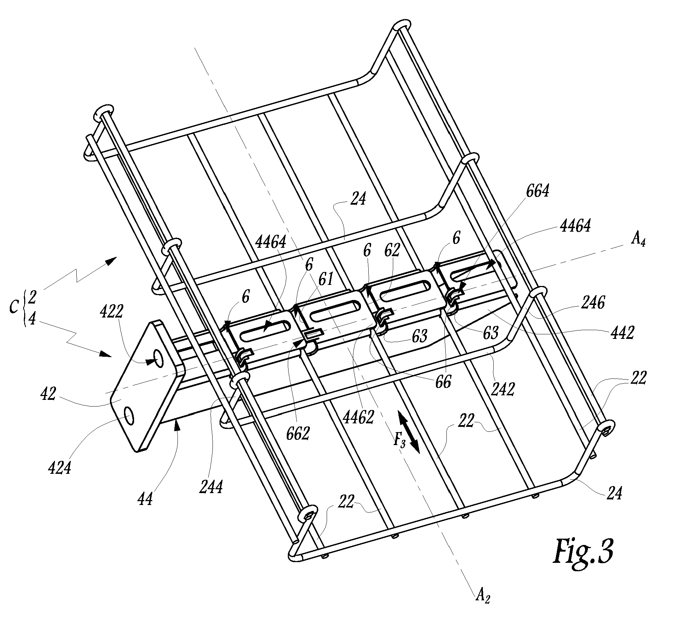

Lorsque les fils de chaînes 22 de la goulotte ont été introduits dans les encoches 6 et poussés en direction de la semelle 42, comme représenté aux figures 1 et 2, il est possible de déformer plastiquement chaque languette 6 pour la faire parvenir dans une deuxième configuration représentée, pour la deuxième languette 66 en partant de la gauche, aux figures 3 et 4. Le bord 61 correspond à une ligne de pliage de la languette 66.

Dans cette deuxième configuration, la languette 66 s'étend selon une direction Δ'₆₆ qui, dans cette configuration, est parallèle à l'axe A₄ et son extrémité 662 opposée au bord 61 est au voisinage immédiat du bord 62. En d'autres termes, la distance axiale entre une extrémité 662 de languette 66 et le bord 61 a alors une valeur d₂ faible, de l'ordre de quelques dixièmes de millimètres. La distance d₂ est choisie très inférieure au diamètre D₂₂, notamment inférieure à 20 % de ce diamètre. Ainsi, lorsqu'une languette 66 s'étend parallèlement à l'axe A₄, un fil de chaîne 22 engagé dans l'encoche 6 adjacente est verrouillé dans cette encoche, puisque ce fil 22 ne peut pas passer à travers la portion de l'encoche 6 comprise entre les bords 61 et 62.

Dans la deuxième configuration, la languette 66 est dans le prolongement de la paroi dorsale 446. Lorsque les fils de chaîne 22 de la goulotte 2 sont introduits dans les encoches 6, la paroi dorsale 446 est parallèle au fond de la goulotte 2.

En pratique, et selon un aspect de l'invention qui n'est pas représenté sur les figures, la languette 66 est fabriquée par cisaillage du flan de tôle constitutif du support 2 et la distance d₂ est nulle ou quasi nulle. De ce fait, lorsque la languette 66 est rabattue dans sa deuxième configuration, elle vient buter contre la paroi 446 et la direction Δ'₆₆ selon laquelle elle s'étend, forme avec l'axe A₄ un angle inférieur à 12°. La direction Δ'₆₆ et l'axe A₄ sont alors globalement parallèles, même s'ils ne sont pas rigoureusement parallèles.

Dans la deuxième configuration représentée pour la deuxième languette 66 en partant de la gauche sur les figures 3 et 4, un fil de chaîne 22 peut toutefois se déplacer dans l'encoche 6, dans laquelle il est retenu prisonnier, à la fois selon une direction parallèle à l'axe A₄, ce que représente la flèche F₁ et selon une direction perpendiculaire à la paroi dorsale 446, ce que représente la flèche F₂. Ces déplacements selon les flèches F₁ et F₂ sont limités par la géométrie des bords 63 et 64.

En outre, chaque fil 22 peut se déplacer à l'intérieur d'une encoche 6 parallèlement à l'axe A₂, c'est-à-dire perpendiculairement au plan des figures 2 et 4, ce que représente la flèche F₃ à la figure 3.

Ainsi, dans la deuxième configuration, la languette 66 retient le fil de chaîne 22 dans l'encoche 6, sans le brider contre les parois de l'encoche 6.

Chaque languette 66 est percée d'une ouverture 664 dans laquelle peut être introduite la pointe 101 d'un tournevis 100 pour déformer plastiquement chaque languette 66 afin de la faire passer de sa première configuration à sa deuxième configuration identifiées ci-dessus, en appliquant sur le tournevis 100 un couple de basculement C₁₀₀.

On comprend que, à partir de la configuration de la figure 4, il est possible de déformer plastiquement chacune des languettes 66 pour retenir chacun des fils de chaîne 22 du fond de la goulotte 2 dans une encoche correspondante 6 de la console 4.

Toutefois, comme représenté aux figures 3 et 4, le fait de déformer plastiquement une seule languette 66 de sa première configuration vers sa deuxième configuration, assure le maintien de la position de la goulotte 2 sur la console 4, même si ce maintien est moins précis que dans le cas où toutes les languettes sont déformées plastiquement, comme envisagé ci-dessus.

Quel que soit le nombre, supérieur ou égal à 1, de languettes 6 déformées plastiquement pour atteindre leur deuxième configuration, la goulotte 2 est retenue en position sur la console 4 avec une possibilité de mouvement longitudinal F₃, sur une course correspondant à l'écartement entre deux fils de trame 24, et avec une possibilité de mouvement transversal F₁ et F₂ de faible amplitude.

Ces possibilités de mouvement permettent d'ajuster la position des différentes goulottes 2 du chemin de câbles C, notamment en vue de leur éclissage ou en cas de dilatation différentielle des parties du chemin de câbles C et de la structure sur laquelle il est monté.

Selon une variante non représentée de l'invention, certaines ou toutes les languettes 66 pourraient être prévues sur les bords des encoches 6 les plus proches de la semelle 42, au niveau de la paroi dorsale supérieure 446. Toutefois, le mode de réalisation représenté où les encoches sont situées sur les bords 61 les plus éloignés de cette semelle facilite l'application du couple C₁₀₀.

Selon une autre variante non représentée de l'invention, le support 4 peut être dépourvu de la semelle 42 et être alors muni d'un autre moyen de fixation au mur ou au plafond, tel que des trous oblongs permettant le passage de tiges filetées ou de suspentes.

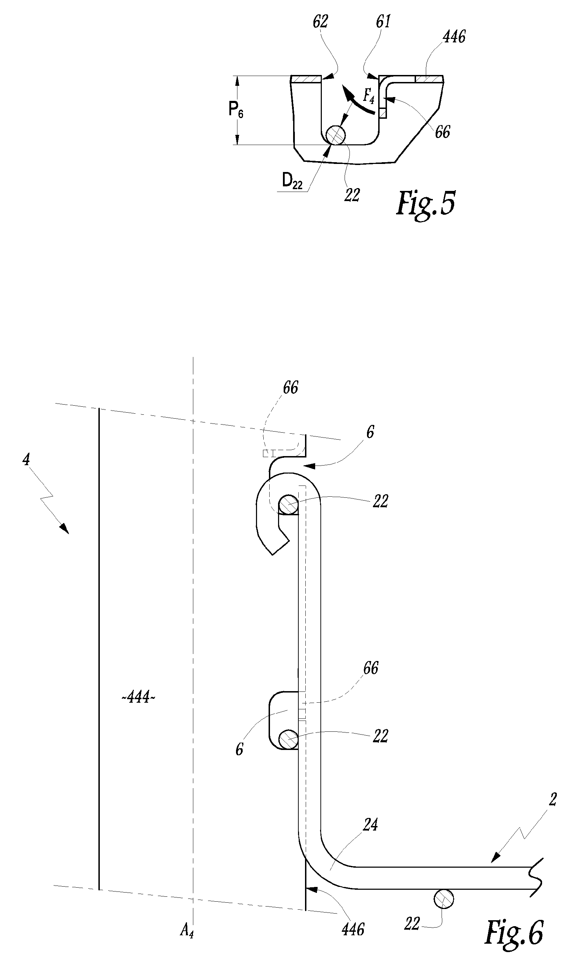

Dans les deuxième et troisième modes de réalisation de l'invention représentés aux figures 5 et 6, les éléments analogues à ceux du premier mode de réalisation portent les mêmes références.

Dans le mode de réalisation de la figure 5, le bord 62 de l'encoche 6 n'est pas défini dans une partie en porte-à-faux de la paroi dorsale supérieure 446. Dans ce cas, afin d'éviter que la languette 66 ne heurte le fil de chaîne 22, lorsqu'elle est déformée pour atteindre sa deuxième configuration, dans le sens de la flèche F₄, la profondeur P₆ de l'encoche 6, c'est-à-dire sa dimension perpendiculaire à la paroi dorsale 446 est augmentée par rapport au premier mode de réalisation. En pratique, la profondeur P₆ est supérieure à la somme de la longueur de la partie de la languette 66 qui est perpendiculaire à la paroi 446 et au diamètre D₂₂ d'un fil de chaîne.

Dans le troisième mode de réalisation, un pendard 4 de section carrée est utilisé pour supporter une goulotte 2 en treillis de fils soudés, l'axe longitudinal A₄ du pendard 4 étant vertical en configuration d'utilisation. Selon une variante non représentée de l'invention, le pendard 4 peut être de section ronde ou d'une autre section.

Ce pendard 4 est pourvu d'encoches 6 comparables à celles du premier mode de réalisation et qui sont ménagées à la fois dans une paroi latérale plane 446 et dans les ailes de ce pendard, dont une est visible avec la référence 444. Ces encoches 6 sont destinées à recevoir les fils de chaîne des côtés de la goulotte 2, chaque encoche 6 étant bordée par une languette déformable 66 comparable à celle du premier mode de réalisation.

Comme cela ressort de la figure 6, la goulotte 2 est modifiée par rapport à celle des figures 1 à 4 pour ne comprendre qu'un seul fil de chaîne 22 au voisinage des extrémités recourbée des fils de trame 24.

Dans le deuxième et troisième mode de réalisation, chaque languette 66 est mobile entre deux configurations analogues à celles mentionnées pour le premier mode de réalisation.

Quel que soit le mode de réalisation considéré, seules certaines encoches peuvent être pourvues de languettes de verrouillages déformables 66.

Selon une variante non représentée de l'invention, les languettes de verrouillages 66 pourraient être disposées de façon alternée sur les bords 61 et sur les bords 62.

Quel que soit le mode de réalisation, la paroi dans laquelle sont définis les bords 61 et 62 des encoches 6, notamment la paroi dorsale supérieure 446 dans le premier mode de réalisation, est pourvue avantageusement d'ouverture 4464, permettant le passage de boulons de montage d'une goulotte en tôle perforée. Ainsi, la console 4 est compatible avec le supportage d'une goulotte en treillis de fils soudés ou d'une goulotte en tôle perforée.

Selon d'autres variantes non représentées de l'invention, le support 4, qu'il s'agisse d'une console ou d'un pendard, peut avoir une section transversale avec une géométrie en L, Z ou Ω. Les caractéristiques techniques des modes de réalisation et variantes mentionnés ci-dessus peuvent être combinées entre elles.

## Revendications

1. Chemin de câbles (C) comprenant au moins une goulotte (2) en treillis de fils soudés (22, 24) et au moins un support (4) sur lequel est montée la goulotte (2), le support (4) comprenant un corps (44) qui a un profil en U, avec deux ailes (442, 444) et une paroi dorsale (446), au moins une encoche (6) étant ménagée à la fois dans la paroi dorsale (446) et dans les ailes (442, 444) (446), cette encoche (6) étant adaptée pour recevoir un fil de chaîne (22) de la goulotte (2), au moins un premier bord (61) de l'encoche (6) étant pourvu d'au moins une languette (66) de verrouillage d'un fil de chaîne (22), déformable entre une première configuration et une deuxième configuration , la languette (6), dans la première configuration, étant rabattue selon une direction (Δ₆₆) perpendiculaire à un axe longitudinal (A₄) du support (4) et s'étendant, par rapport à un deuxième bord (62) de l'encoche (6) situé au niveau de la paroi dorsale (446), à une première distance (d₁), mesurée parallèlement à l'axe longitudinal (A₄), strictement supérieure au diamètre (D₂₂) du fil de chaîne (22), et le chemin de câbles (C) étant **caractérisé en ce que** le premier bord (61) est au niveau de la paroi dorsale (446) et **en ce que**, dans la deuxième configuration, la languette (66) s'étend selon un direction (Δ'₆₆) parallèle ou globalement parallèle à l'axe longitudinal (A₄) en direction du deuxième bord (62) de l'encoche (6), à une deuxième distance (d₂) de ce deuxième bord (62), mesurée parallèlement à l'axe longitudinal (A₄) du support (4), strictement inférieure au diamètre (D₂₂) du fil de chaîne (22).

2. Chemin de câbles (C) selon la revendication 1, **caractérisé en ce que**, dans la deuxième configuration, la distance (d₂) entre la languette (66) et le deuxième bord (62) de l'encoche (6) est inférieure à 20 % du diamètre (D₂₂) du fil de chaîne (22).

3. Chemin de câbles (C) selon l'une des revendications précédentes, **caractérisé en ce que** la languette (66) présente une ouverture (664) de passage d'un outil (100) de manoeuvre de la languette pour sa déformation de sa première configuration vers sa deuxième configuration.

4. Chemin de câbles (C) selon l'une des revendications précédentes, **caractérisé en ce que** le deuxième bord (62) est formé sur une partie (4462) de la paroi (446) qui s'étend en porte-à-faux (L₄) par rapport aux portions (63, 64) de l'encoche ménagées dans les côtés (442, 444).

5. Chemin de câbles (C) selon l'une des revendications précédentes, **caractérisé en ce que** le support (4) est pourvu de plusieurs encoches (6) aptes à recevoir chacune un fil de chaîne (22) d'une goulotte (2) et **en ce que** chaque encoche est pourvue d'une languette de verrouillage (66) déformable entre la première position et la deuxième position.

6. Chemin de câbles (C) selon l'une des revendications précédentes, **caractérisé en ce que** la paroi (446) présente des ouvertures (4464) de passage d'un moyen de fixation d'une goulotte de chemin de câbles en tôle.

7. Chemin de câbles (C) selon l'une des revendications précédentes, **caractérisé en ce que** le support (4) constitue une console de supportage (4) qui, en configuration installée, a son axe longitudinal (A₄) horizontal et **en ce que** la paroi (446) est une paroi supérieure de la console, la ou les encoches (6) étant destinées à recevoir chacune un fil de chaîne (22) constitutif du fond d'une goulotte.

8. Chemin de câbles (C) selon l'une des revendications 1 à 6, **caractérisé en ce que** le support (4) constitue un pendard de supportage (4) qui, en configuration installée, a son axe longitudinal (A₄) vertical et **en ce que** la paroi (446) est une paroi latérale du pendard, la ou les encoches (6) étant destinées à recevoir chacune un fil de chaîne (22) constitutif d'un côté de la goulotte (2).

9. Chemin de câbles (C) selon l'une des revendications précédentes, **caractérisé en ce que** le deuxième bord (62) de chaque encoche (6) est plus proche d'une semelle (42) de fixation du support (4) que le premier bord (61) de cette encoche (6).

10. Méthode de montage d'une goulotte (2) en treillis de fils soudés (22, 24) sur un support (4) qui comprend un corps (44) qui a un profil en U, avec deux ailes (442, 444) et une paroi dorsale (446),au moins une encoche (6) adaptée pour recevoir un fil de chaîne (22) de la goulotte étant ménagée à la fois dans la paroi dorsale (446) et dans les ailes (442, 444), dans laquelle un fil de chaîne de la goulotte (2) est mis en place dans l'encoche (6) du support (4), **caractérisée en ce que** cette méthode comprend une étape consistant à :
a) déformer plastiquement (C₁₀₀) une languette de verrouillage (66) s'étendant à partir d'un premier bord (61) de l'encoche (6) situé au niveau de la paroi dorsale (446) et en direction d'un deuxième bord (62) de l'encoche (6) situé au niveau de la paroi dorsale (446), en faisant passer la languette de verrouillage d'une première configuration, dans laquelle la languette (66) est rabattue selon une direction (Δ₆₆) perpendiculaire à un axe longitudinal (A₄) du support et s'étend, par rapport au deuxième bord (62), à une première distance (d₁) mesurée parallèlement à l'axe longitudinal, strictement supérieure au diamètre (D₂₂) du fil de chaîne (22), vers une deuxième configuration, dans laquelle la languette (66) s'étend selon une direction (Δ'₆₆) parallèle ou globalement parallèle à l'axe longitudinal (A₄) en direction du deuxième bord (62) de l'encoche, à une deuxième distance (d₂) de ce deuxième bord, mesurée parallèlement à l'axe longitudinal, strictement inférieure au diamètre (D₂₂) du fil de chaîne (22).

## Patentansprüche

1. Kabelkanal (C), mindestens eine Rinne (2) aus einem Gitter mit geschweißten Drähten (22, 24) und mindestens einen Träger (4) umfassend, auf dem die Rinne (2) befestigt ist, wobei der Träger (4) einen Körper (44) mit einem U-Profil, das zwei Schenkel (442, 444) und eine Rückwand (446) aufweist, umfasst und mindestens ein Einschnitt (6) sowohl in der Rückwand (446) als auch in den Schenkeln (442, 444) eingearbeitet ist, wobei dieser Einschnitt (6) angepasst ist, einen Kettdraht (22) der Rinne (2) aufzunehmen, und mindestens ein erster Rand (61) des Einschnitts (6) mit mindestens einer Zunge (66) zum Verriegeln des Kettdrahtes (22) versehen ist, die zwischen einer ersten Stel-lung und einer zweiten Stellung deformierbar ist, wobei die Zunge (66) in der ersten Stellung gemäß einer Richtung (Δ₆₆) senkrecht zu einer Längsachse (A₄) des Trägers (4) umgebogen ist und sich in Bezug auf einen zweiten Rand (62) des Einschnitts (6), der an der Rückwand (446) liegt, in einer ersten Entfernung (d₁), gemessen parallel zur Längsachse (A₄), strikt größer als der Durchmesser (D₂₂) des Kettdrahtes (22) erstreckt, wobei der Kabelkanal (C) **dadurch gekennzeichnet ist, dass** der erste Rand (61) an der Rückwand (446) liegt und dass in der zweiten Stellung die Zunge (66) sich gemäß einer Richtung (Δ'₆₆) parallel oder im Wesentlichen parallel zur Längsachse (A₄) in Richtung des zweiten Randes (62) des Einschnitts (6) in einer zweiten Entfernung (d₂) von diesem zweiten Rand (62), gemessen parallel zur Längsachse (A₄) des Trägers (4), strikt kleiner als der Durchmesser (D₂₂) des Kettdrahtes (22) erstreckt.

2. Kabelkanal (C) nach Anspruch 1, **dadurch gekennzeichnet, dass** in der zweiten Stellung die Entfernung (d₂) zwischen der Zunge (66) und dem zweiten Rand (62) des Einschnitts (6) unter 20% des Durchmessers (D₂₂) des Kettdrahtes (22) liegt.

3. Kabelkanal (C) nach einem der vorhergehenden Ansprüche, **dadurch gekennzeichnet, dass** die Zunge (66) eine Öffnung (664) für den Durchgang eines Werkzeugs (100) zur Betätigung der Zunge für ihre Verformung von der ersten Stellung in ihre zweite Stellung aufweist.

4. Kabelkanal (C) nach einem der vorhergehenden Ansprüche, **dadurch gekennzeichnet, dass** der zweite Rand (62) an einem Teil (4462) der Wand (446) gebildet ist, der in Bezug auf Bereiche (63, 64) des Einschnitts, die in den Seiten (442, 444) eingearbeitet sind, auskragt (L₄).

5. Kabelkanal (C) nach einem der vorhergehenden Ansprüche, **dadurch gekennzeichnet, dass** der Träger (4) mit mehreren Einschnitten (6) versehen ist, die geeignet sind, jeweils einen Kettdraht (22) einer Rinne (2) aufzunehmen, und dass jeder Einschnitt mit einer Verriegelungszunge (66) versehen ist, die zwischen der ersten Stellung und der zweiten Stellung deformierbar ist.

6. Kabelkanal (C) nach einem der vorhergehenden Ansprüche, **dadurch gekennzeichnet, dass** die Wand (446) Öffnungen (4464) für den Durchgang eines Befestigungsmittels für eine Rinne eines Kabelkanals aus Blech aufweist.

7. Kabelkanal (C) nach einem der vorhergehenden Ansprüche, **dadurch gekennzeichnet, dass** der Träger (4) eine Stützkonsole (4) bildet, die in der installierten Stellung ihre Längsachse (A₄) horizontal hat, und dass die Wand (446) eine obere Wand der Konsole ist, wobei der oder die Einschnitte (6) dazu vorgesehen sind, jeweils einen Kettdraht (22) aufzunehmen, der Bestandteil des Bodens einer Rinne ist.

8. Kabelkanal (C) nach einem der Ansprüche 1 bis 6, **dadurch gekennzeichnet, dass** der Träger eine Stützabhängung (4) bildet, die in der installierten Stellung ihre Längsachse (A₄) vertikal ausgebildet hat, und dass die Wand (446) eine Seitenwand der Abhängung ist, wobei die Rinne(n) (6) vorgesehen ist/sind, jeweils einen Kettdraht (22) aufzunehmen, der Bestandteil einer Seite der Rinne (2) ist.

9. Kabelkanal (C) nach einem der vorhergehenden Ansprüche, **dadurch gekennzeichnet, dass** der zweite Rand (62) jedes Einschnitts (6) näher an einer Befestigungsfußplatte (42) des Trägers (4) liegt als der erste Rand (61) dieses Einschnitts (6).

10. Verfahren für die Montage einer Gitterrinne (2) aus verschweißten Drähten (22, 24) an einem Träger (4), der einen U-förmigen Körper (44) mit zwei Schenkeln (442, 444) und einer Rückwand (446) aufweist, wobei mindestens ein Einschnitt (6), der angepasst ist, einen Kettdraht (22) der Rinne aufzunehmen, sowohl in der Rückwand (446) als auch in den Schenkeln (442, 444) ausgebildet ist, wobei ein Kettdraht der Rinne (2) in dem Einschnitt (6) des Trägers (4) in Stellung gebracht wird, **dadurch gekennzeichnet, dass** dieses Verfahren einen Schritt umfasst, der darin besteht:
a) plastisch (C₁₀₀) eine Verriegelungszunge (66) zu deformieren, die sich von einem ersten Rand (61) des Einschnitts (6), der an der Rückwand (446) liegt, und in Richtung eines zweiten Randes (62) des Einschnitts (6), der an der Rückwand (446) liegt, erstreckt, wobei die Verriegelungszunge von einer ersten Stellung, in der die Zunge (66) gemäß einer Richtung (Δ₆₆) senkrecht zu einer Längsachse (A₄) des Trägers umgebogen ist und sich in Bezug auf den zweiten Rand (62) in einer ersten Entfernung (d₁), gemessen parallel zur Längsachse, strikt größer als der Durchmesser (D₂₂) des Kettdrahtes (22) erstreckt, in eine zweite Stellung gebracht wird, in der die Zunge (66) sich gemäß einer Richtung (Δ"₆₆) parallel oder im Wesentlichen parallel zur Längsachse (A₄) in Richtung des zweiten Randes (62) des Einschnitts in einer zweiten Entfernung (d₂) von diesem zweiten Rand, gemessen parallel zur Längsachse, strikt kleiner als der Durchmesser (D₂₂) des Kettdrah-tes (22) erstreckt.

## Claims

1. Cable tray (C) comprising at least one trough (2) of welded wire mesh (22, 24) and at least one support (4), on which the trough (2) is mounted, the support (4) comprising a body (44) with a U-shaped profile, with two wings (442, 444) and a back wall (446), at least one slot (6) being arranged both in the back wall (446) and in the wings (442, 444) (446), wherein this slot (6) is fitted to receive a warp wire (22) of the trough (2), at least one first edge (61) of the slot (6) is provided with at least one locking tab (66) for a warp wire (22), which is deformable between a first configuration and a second configuration, wherein in the first configuration the tab (6) is bent down in a direction (Δ₆₆) perpendicular to a longitudinal axis (A₄) of the support (4) and extends in relation to a second edge (62) of the slot (6) located at the level of the back wall (446) at a first distance (d₁) measured parallel to the longitudinal axis (A₄) and strictly larger than the diameter (D₂₂) of the warp wire (22), and the cable tray (C) is **characterised in that** the first edge (61) is at the level of the back wall (446), and that in the second configuration the tab (66) extends in a direction (Δ'₆₆) parallel or largely parallel to the longitudinal axis (A₄) in the direction of the second edge (62) of the slot (6) at a second distance (d₂) from this second edge (62) measured parallel to the longitudinal axis (A₄) of the support (4) and strictly smaller than the diameter (D₂₂) of the warp wire (22).

2. Cable tray (C) according to claim 1, **characterised in that** in the second configuration the distance (d₂) between the tab (66) and the second edge (62) of the slot (6) is less than 20% of the diameter (D₂₂) of the warp wire (22).

3. Cable tray (C) according to one of the preceding claims, **characterised in that** the tab (66) has an opening (664) for passage of a tool (100) for moving the tab for deformation from its first configuration to its second configuration.

4. Cable tray (C) according to one of the preceding claims, **characterised in that** the second edge (62) is formed on a part (4462) of the wall (446), which extends to overhang (L₄) in relation to the portions (63, 64) of the slot arranged in the sides (442, 444).

5. Cable tray (C) according to one of the preceding claims, **characterised in that** the support (4) is provided with several slots (6) fitted to each receive a warp wire (22) of a trough (2) and that each slot is provided with a locking tab (66) that is deformable between the first position and the second position.

6. Cable tray (C) according to one of the preceding claims, **characterised in that** the wall (446) has openings (4464) for passage of a fastening device for a sheet metal cable tray trough.

7. Cable tray (C) according to one of the preceding claims, **characterised in that** the support (4) constitutes a support bracket (4), which in installed configuration has its longitudinal axis (A₄) in horizontal position, and that the wall (446) is an upper wall of the bracket, the slot or slots (6) being provided to each receive a warp wire (22) forming the base of a trough.

8. Cable tray (C) according to one of claims 1 to 6, **characterised in that** the support (4) constitutes a support hanger (4), which in installed configuration has its longitudinal axis (A₄) in vertical position, and that the wall (446) is a side wall of the hanger, the slot or slots (6) being provided to each receive a warp wire (22) forming a side of a trough.

9. Cable tray (C) according to one of the preceding claims, **characterised in that** the second edge (62) of each slot (6) is closer to a fastening flange (42) of the support (4) than the first edge (61) of this slot (6).

10. Method for mounting a trough (2) of welded wire mesh (22, 24) on a support (4), which comprises a body (44) with a U-shaped profile, with two wings (442, 444) and a back wall (446), at least one slot (6) fitted to receive a warp wire (22) of the trough being arranged both in the back wall (446) and in the wings (442, 444), in which a warp wire of the trough (2) is positioned in the slot (6) of the support (4), **characterised in that** this method comprises a step consisting of:
a) plastically deforming (C₁₀₀) a locking tab (66) extending from a first edge (61) of the slot (6) located at the level of the back wall (446) and in the direction of a second edge (62) of the slot (6) located at the level of the back wall (446), causing the locking tab to more from a first configuration, in which the tab (66) is bent down in a direction (Δ₆₆) perpendicular to a longitudinal axis (A₄) of the support and extends in relation to the second edge (62) at a first distance (d₁) measured parallel to the longitudinal axis and strictly larger than the diameter (D₂₂) of the warp wire (22) to a second configuration, in which the tab (66) extends in a direction (Δ'₆₆) parallel or largely parallel to the longitudinal axis (A₄) in the direction of the second edge (62) of the slot at a second distance (d₂) from this second edge measured parallel to the longitudinal axis and strictly smaller than the diameter (D₂₂) of the warp wire (22).
